# EUROPEAN PATENT APPLICATION

(11) **EP 4 250 663 A1**
(43) Date of publication of application: **27.09.2023**
(21) Application number: 21894060.9
(22) Date of filing: 22.11.2021
(51) Int. Cl.: H04L 41/16

(54) **COMMUNICATION METHOD AND APPARATUS, AND COMMUNICATION DEVICE**

(30) Priority: 23.11.2020 CN 202011324299
(71) Applicant: Vivo Mobile Communication Co., Ltd., Dongguan, Guangdong 523863 (CN)
(72) Inventor: YANG, Ang, Dongguan, Guangdong 523863 (CN); SUN, Peng, Dongguan, Guangdong 523863 (CN)
(74) Representative: Murgitroyd & Company
(86) International application number: PCT/CN2021/132073
(87) International publication number: WO 2022/105913

(57) **Abstract**

This application discloses a communication method, a communications apparatus, and a communications device, and relates to the field of wireless communications technologies. The method includes: dividing, by a first communications device, first communication information into n pieces of first target subband information; inputting the n pieces of first target subband information into a first artificial intelligence AI subnetwork of a first AI network model, where a maximum input amount of the first AI subnetwork is N pieces of subband information, a maximum input amount of the first AI network is M pieces of subband information, n, M, and N are all integers greater than 0, n is less than or equal to N, and N is less than or equal to M; and sending second communication information output by the first AI subnetwork.

## Description

### CROSS-REFERENCE

The present invention claims priority to Chinese Patent Application No. 202011324299.8, filed with the China National Intellectual Property Administration on November 23, 2020 and entitled "COMMUNICATION METHOD, COMMUNICATIONS APPARATUS, AND COMMUNICATIONS DEVICE", which is incorporated herein by reference in its entirety.

### TECHNICAL FIELD

This application relates to the field of wireless communications technologies, and in particular, to a communication method, a communications apparatus, and a communications device.

### BACKGROUND

Currently, artificial intelligence (Artificial Intelligence, AI) networks (also referred to as neural networks) have been widely used in various fields.

In the related art, an input size of an AI network is usually fixed, and if inputs of different sizes are required, an AI network needs to be constructed for each input size. In an actual application environment, an input of the AI network may change at any time. For example, in the field of communications technology, when a data stream that can be transmitted through a wireless network is generated from to-be-sent original information through an Al network, a size of the to-be-sent original information is usually not fixed. Therefore, it is required to construct an AI network for each input size, resulting in an excessive quantity of Al networks stored in a communications device, and increasing a storage pressure of the communications device.

### SUMMARY

Embodiments of this application provide a communication information sending method and apparatus, and a communications device, to resolve a problem of an excessive quantity of AI networks stored in the communications device.

According to a first aspect, a communication information sending method is provided, including: dividing, by a first communications device, first communication information into n pieces of first target subband information; inputting the n pieces of first target subband information into a first artificial intelligence AI subnetwork of a first AI network model, where a maximum input amount of the first AI subnetwork is N pieces of subband information, a maximum input amount of the first AI network is M pieces of subband information, n, M, and N are all integers greater than 0, n is less than or equal to N, and N is less than or equal to M; and sending second communication information output by the first AI subnetwork.

According to a second aspect, a communication information sending apparatus is provided, including: a division module, configured to divide first communication information into n pieces of first target subband information; an input module, configured to input the n pieces of first target subband information into a first artificial intelligence AI subnetwork of a first AI network model, where a maximum input amount of the first AI subnetwork is N pieces of subband information, a maximum input amount of the first AI network is M pieces of subband information, n, M, and N are all integers greater than 0, n is less than or equal to N, and N is less than or equal to M; and a sending module, configured to send second communication information output by the first AI subnetwork.

According to a third aspect, a communications device is provided, where the communications device includes a processor, a memory, and a program or an instruction that is stored in the memory and executable on the processor, and when the program or the instruction is executed by the processor, steps of the method according to the first aspect are implemented.

According to a fourth aspect, a readable storage medium is provided, where the readable storage medium stores a program or an instruction, and when the program or the instruction is executed by a processor, steps of the method according to the first aspect are implemented.

According to a fifth aspect, a chip is provided, where the chip includes a processor and a communications interface, the communications interface is coupled to the processor, and the processor is configured to run a program or an instruction of a terminal to implement the steps of the method according to the first aspect.

According to a sixth aspect, a computer program product is provided, where the computer program product includes a processor, a memory, and a program or an instruction that is stored in the memory and executable on the processor, where when the program or the instruction is executed by the processor, steps of the method according to the first aspect are implemented.

In the embodiments of this application, the first communications device divides the first communication information into the n pieces of first target subband information; inputs the n pieces of first target subband information into the first AI subnetwork of the first AI network model, where the maximum input amount of the first AI subnetwork is N pieces of subband information, the maximum input amount of the first AI network is M pieces of subband information, n is less than or equal to N, and N is less than or equal to M; and then sends the second communication information output by the first Al subnetwork. In the embodiments of this application, the first AI network module includes a plurality of AI subnetworks, the plurality of Al subnetworks may be laid out in a nested manner, and each AI subnetwork corresponds to a different maximum input amount, so that based on an actual size of input information, a corresponding AI subnetwork may be selected for input. This reduces a quantity of stored AI network models, reduces complexity of the AI networks, and improves performance of a communications system.

### BRIEF DESCRIPTION OF DRAWINGS

FIG. 1 is a schematic diagram of a wireless communications system to which an embodiment of this application can be applied;
FIG. 2 is a schematic flowchart of a communication information sending method according to an embodiment of this application;
FIG. 3 is a schematic structural diagram of an AI network model according to an embodiment of this application;
FIG. 4 is a schematic structural diagram of another AI network model according to an embodiment of this application;
FIG. 5 is a schematic structural diagram of still another AI network model according to an embodiment of this application;
FIG. 6 is a schematic structural diagram of still another AI network model according to an embodiment of this application;
FIG. 7 is a schematic structural diagram of still another AI network model according to an embodiment of this application;
FIG. 8 is a schematic structural diagram of still another AI network model according to an embodiment of this application;
FIG. 9 is a schematic structural diagram of still another AI network model according to an embodiment of this application;
FIG. 10 is a schematic structural diagram of still another AI network model according to an embodiment of this application;
FIG. 11a is a schematic structural diagram of still another AI network model according to an embodiment of this application;
FIG. 11b is a schematic structural diagram of still another AI network model according to an embodiment of this application;
FIG. 12 is a schematic structural diagram of a communication information sending apparatus according to an embodiment of this application;
FIG. 13 is a schematic structural diagram of a communications device according to an embodiment of this application;
FIG. 14 is a schematic structural diagram of hardware of a terminal according to an embodiment of this application; and
FIG. 15 is a schematic structural diagram of hardware of a network side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, data used in this way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The described technologies can be applied to both the systems and the radio technologies mentioned above as well as to other systems and radio technologies. A new radio (New Radio, NR) system is described in the following description for illustrative purposes, and the NR terminology is used in most of the following description, although these technologies can also be applied to applications other than the NR system application, such as the 6th generation (6^{th} Generation, 6G) communications system.

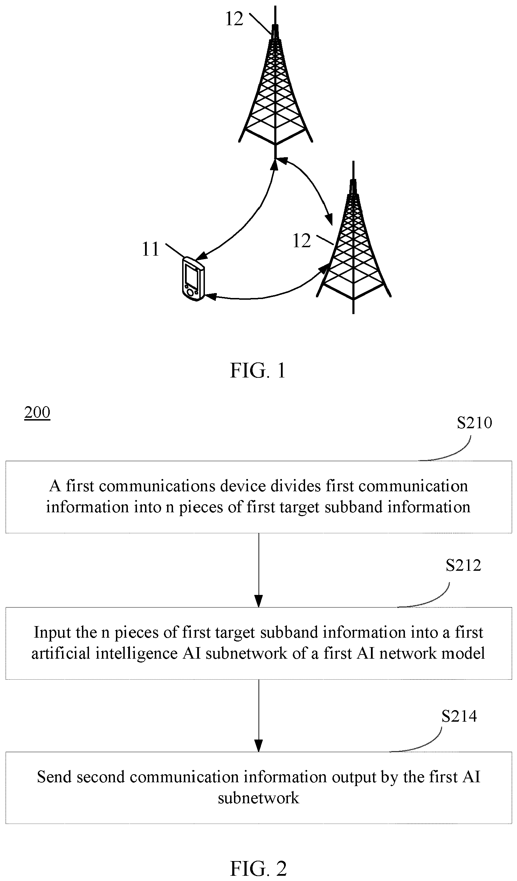

FIG. 1 is a schematic diagram of a wireless communications system to which an embodiment of this application can be applied. The wireless communications system includes a terminal 11 and a network side device 12. The terminal 11 may also be referred to as a terminal device or user equipment (User Equipment, UE). The terminal 11 may be a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VLTE), pedestrian user equipment (PUE), or another terminal side device. The wearable device includes a wristband, earphones, glasses, and the like. The wearable device includes a wristband, earphones, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

A communication information sending scheme provided in embodiments of this application is described below with reference to the accompanying drawings in detail by using specific embodiments and application scenarios thereof.

FIG. 2 is a schematic flowchart of a communication information sending method according to an embodiment of this application, and the method 200 may be performed by a first communications device. In other words, the method may be performed by software or hardware installed in the first communications device. As shown in FIG. 2, the method may include the following steps.

S210: The first communications device divides first communication information into n pieces of first target subband information.

In a possible implementation, subband division may be based on frequency domain resource division, time domain resource division, spatial domain resource division, code domain resource division, and the like. Therefore, in this possible implementation, S210 may include: dividing the first communication information into one or more pieces of first target subband information based on a target resource of the first communication information, where the target resource includes at least one of the following: a frequency domain resource, a time domain resource, a spatial domain resource, a code domain resource, a time delay domain resource, a Doppler domain resource, a Fourier transform domain resource, an S domain resource, a Z domain resource, and a resource of another type of transform domain.

In the foregoing possible implementation, an S domain refers to a fact that an imaginary exponent exp(jωt) is used as a basic signal in frequency domain analysis, and any signal may be decomposed into a plurality of imaginary exponent components of different frequencies. A Z domain is a Z-transformed domain. The Z-transform is a classical transformation in mathematics.

In a specific application, optionally, a predetermined resource size may be used as a unit with reference to dividing the first communication information into one or more pieces of subband information. Therefore, in a possible implementation, that the first communications device divides the first communication information into the one or more pieces of subband information includes at least one of the following (1) to (4).
(1) The first communication information is divided, in a unit of a frequency domain unit resource, into one or more pieces of subband information on the frequency domain resource, where the frequency domain unit resource includes at least one of the following: a carrier, a resource block (Resource Block, RB), a physical resource block (Physical Resource Block, PRB), a subband, a precoding resource block group (Precoding Resource block Group, PRG), and a bandwidth part (Bandwidth Part, BWP). That is, in this possible implementation, the first communication information may be divided based on an RB, a PRB, a PRG, a subband, or a BWP, and information on every one or more RBs, PRBs, PRGs, subbands, or BWPs of the first communication information is divided into one subband.
(2) The first communication information is divided, in a unit of a time domain unit resource, into one or more pieces of subband information on the time domain resource, where the time domain unit resource includes at least one of the following: a symbol, a slot, a half-slot, a frame, a subframe, a radio frame, a millisecond, a second, and another time unit. That is, in this possible implementation, the first communication information may be divided based on a symbol, a slot, a half-slot, a frame, a subframe, a radio frame, a millisecond, a second, or another time unit, and information on every one or more symbols, slots, half-slots, frames, subframes, radio frames, milliseconds, seconds or other time units of the first communication information is divided into one subband. The symbol includes but is not limited to an orthogonal frequency division multiplex (Orthogonal frequency division multiplex, OFDM) symbol.
(3) The first communication information is divided, in a unit of a spatial domain unit resource, into one or more pieces of subband information on the spatial domain resource, where the spatial domain unit resource includes at least one of the following: an antenna, an antenna element, an antenna panel, a transmit/receive unit, a beam (including an analog beam and a digital beam), a layer (Layer), a rank (Rank), and an antenna angle (such as a tilt angle). That is, in this possible implementation, the first communication information may be divided based on an antenna, an antenna element, an antenna panel, a transmit/receive unit, a beam (including an analog beam and a digital beam), a layer (Layer), a rank (Rank), and an antenna angle (such as a tilt angle).
(4) The first communication information is divided, in a unit of a code domain unit resource, into one or more pieces of subband information on the code domain resource, where the code domain unit resource includes at least one of the following: an orthogonal code, a quasi-orthogonal code, and a semi-orthogonal code. That is, in this possible implementation, the first communication information may be divided based on an orthogonal code, a quasi-orthogonal code, and a semi-orthogonal code.

S212: Input the n pieces of first target subband information into a first artificial intelligence AI subnetwork of a first AI network model, where a maximum input amount of the first AI subnetwork is N pieces of subband information, a maximum input amount of the first AI network is M pieces of subband information, n, M, and N are all integers greater than 0, n is less than or equal to N, and N is less than or equal to M.

In this embodiment of this application, the first artificial intelligence network (also referred to as a neural network) model is configured to process the input subband information to output second communication information corresponding to the first communication information, that is, to-be-sent information. For example, the first artificial intelligence network model may encode one or more pieces of subband information based on broadband information of the first communication information, and output a subband encoded data stream (that is, the second communication information), where the first communication information may be an original signal. The broadband information of the first communication information may be information representing an overall feature of the first communication information.

In this embodiment of this application, the maximum input amount of the first AI network model is M pieces of subband information, the first AI network model may input information of different sizes, and the first AI network model may include a plurality of AI subnetworks, where AI subnetworks for a large information input may include AI subnetworks for a small information input, in other words, the AI subnetworks for the large information input may be constructed based on the AI subnetworks for the small information input.

In this embodiment of this application, each AI subnetwork may correspond to one maximum input amount, and the AI subnetworks may be arranged in a nested manner. For example, a maximum input amount of a first-layer AI subnetwork of the first AI network model is M, an AI subnetwork with a maximum input amount of i and an AI subnetwork with a maximum input amount of (M-i) may be nested inside the AI subnetwork, and an AI subnetwork with a maximum input amount of i and an AI subnetwork with an input size of (M-2i) may be nested inside the AI subnetwork with the maximum input amount of (M-i). The AI subnetworks are arranged in a nested manner in this way. Certainly, this is not limited thereto, and other similar network structures may be alternatively used in actual application.

S214: Send second communication information output by the first AI subnetwork.

In this embodiment of this application, the first AI network module includes a plurality of AI subnetworks, the plurality of AI subnetworks may be laid out in a nested manner, and each AI subnetwork corresponds to a different maximum input amount, so that based on an actual size of input information, a corresponding AI subnetwork may be selected for input. This reduces a quantity of stored AI network models, reduces complexity of the AI networks, and improves performance of a communications system.

In a possible implementation, in S212, when the n pieces of first target subband information are input into the first artificial intelligence AI subnetwork of the first AI network model, the n pieces of first target subband information may be input into the first AI subnetwork in a predetermined order, where the predetermined order includes: a descending order or an ascending order of identifiers of the n pieces of first target subband information.

Alternatively, in another possible implementation, in S212, when the n pieces of first target subband information are input into the first artificial intelligence AI subnetwork of the first AI network model, if an input amount of the first AI subnetwork is fixedly N pieces of subband information, the n pieces of first target subband information and (N-n) pieces of invalid subband information are input into the first AI subnetwork, where the n pieces of first target subband information are located in a specified position. For example, if an input of the first AI subnetwork is 10 fixed subbands, but there are only four valid subbands currently, an input is 123xxxxxx4, where x indicates that the subband has no valid input. When a specific subband has no valid input, default information (such as all zero information), a mathematical combination of at least one piece of valid subband information, or other information may be used as an input of the subband.

In a possible implementation, a size of the second communication information is a fixed value, or a size of the second communication information is determined by an amount of input first target subband information. That is, in this possible implementation, overhead of the second communication information may be fixed, or may vary with a change of an input amount.

For example, the size of the second communication information is directly proportional to the amount of the input first target subband information. For example, a quantity X1 of input subbands corresponds to the overhead of the second communication information being Y1, and when the quantity of input subbands is X1×N, the overhead of the second communication information is Y1×N.

In addition, an increment of the size of the second communication information is directly proportional to an increment of the amount of the input first target subband information. For example, a quantity (X1+X2) of input subbands corresponds to the overhead of the second communication information being (Y1+Y2), and when the quantity of input subbands is (X1+X2×N), the overhead of the second communication information is (Y1+Y2×N). X1 is a basic output amount/a basic subband quantity, and X2 is an additional input using a nested structure.

In a possible implementation of this embodiment of this application, before S210, the first AI network model may be further trained, so that network parameters of the first AI network model are determined. Therefore, in this possible implementation, before S210, the method may further include: training the first AI network model by using a plurality of training samples, where one of the training samples includes: m pieces of subband information and a size of output information corresponding to the m pieces of subband information, and m is less than or equal to M. For example, if quantities of subbands input by the first AI network model and included in the training samples are X1, X2, X3, ..., and Xn, in the samples, the subband quantity X1 corresponds to the overhead of the second communication information being Y1, the subband quantity X2 corresponds to the overhead of the second communication information being Y2, ..., and the subband quantity Xn corresponds to the overhead of the second communication information being Yn. These samples are all used as training samples of the first AI network model, and are input into the first AI network model for training. Optionally, the subband quantity and/or the overhead of the second communication information are/is notified by another communications device or communications module, or notified by the first communications device to another communications device or communications module.

In a possible implementation, after S214, the first communications device may further need to send third communication information. Therefore, in this possible implementation, after S214, the method may further include the following steps:
Step 1: The first communications device divides the third communication information into (n+p) pieces of second target subband information, where p is an integer greater than or equal to 0, that is, in this possible implementation, a size of the third communication information is greater than or equal to a sized of the first communication information.
Step 2: Input n pieces of second target subband information into the first AI subnetwork, and inputting other p pieces of second target subband information in the (n+p) pieces of second target subband information into a second AI subnetwork of the first AI network model, where a maximum input amount of the second AI subnetwork is P pieces of subband information, P is an integer greater than 0, p is less than or equal to P, and P is less than or equal to M. That is, in this possible implementation, n pieces of second target subband information and the other p pieces of second target subband information in the (n+p) pieces of second target subband information are respectively input into two AI subnetworks, where one AI subnetwork is the same as an AI subnetwork into which the first communication information is input, for example, the first AI subnetwork is the same as the AI subnetwork into which the first communication information is input.
Step 3: Send fourth communication information output by the first AI network.

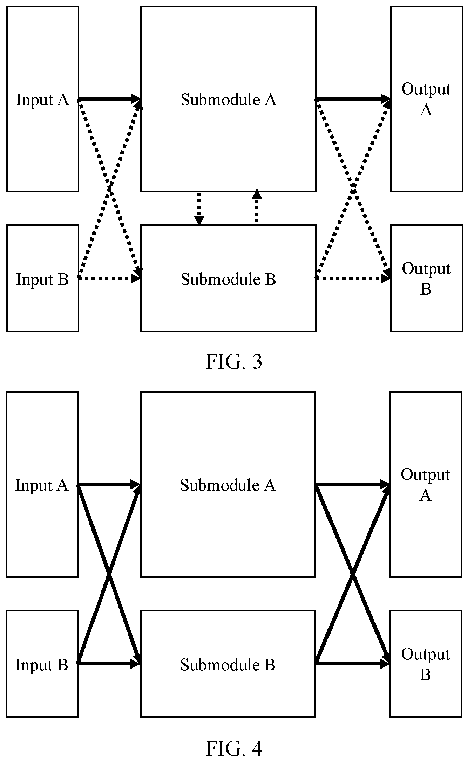

In the foregoing possible implementation, as shown in FIG. 3, input information of the first AI subnetwork may further include at least one of the following: the other p pieces of second target subband information, intermediate information of the second AI subnetwork, and output information of the second AI subnetwork; and input information of the second AI subnetwork further includes at least one of the following: the n pieces of target subband information, intermediate information of the first AI subnetwork, and output information of the first AI subnetwork.

It should be noted that, in each figure in this application, n pieces of subband information is represented by an input A, p pieces of subband information is represented by an input B, the first output information corresponding to the n pieces of subband information is an output A, the second output information corresponding to the p pieces of subband information is an output B, the first AI subnetwork is a sub-module A, and the second AI subnetwork is a sub-module B. Optionally, the first output information is the second communication information, or the second communication information may be obtained after signal processing and/or mathematical operations are performed on the first output information. The mathematical operations may include combinations of various common mathematical operations such as addition, subtraction, multiplication, K^{th} power, K^{th} root, logarithm, derivation, and partial derivation. K is any number. For example, K may be a positive number or a negative number or 0, or may be a real number or a complex number, which is not specifically limited in this embodiment.

For example, in FIG. 4, input information of the first AI subnetwork further includes the other p pieces of second target subband information, and input information of the second AI subnetwork further includes the n pieces of target subband information.

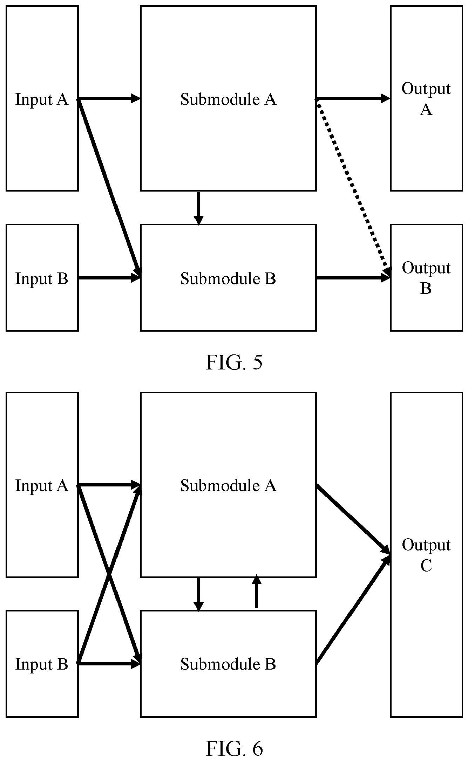

Alternatively, in FIG. 5, input information of the second AI subnetwork includes the n pieces of target subband information and intermediate information of the first AI subnetwork.

Alternatively, in FIG. 6, input information of the first AI subnetwork further includes the other p pieces of second target subband information and intermediate information of the second AI subnetwork, and input information of the second AI subnetwork further includes the n pieces of target subband information and intermediate information of the first AI subnetwork.

In the foregoing possible implementation, the fourth communication information includes at least one of the following: first output information, second output information, and a result obtained after calculation is performed on the first output information and the second output information by a preset algorithm.

For example, in FIG. 3 to FIG. 5, the fourth communication information includes the first output information, or includes the first output information and the second output information. For example, the fourth communication information is a one-dimensional vector or a two-dimensional matrix or a multidimensional matrix obtained after combining the first output information and the second output information.

For another example, in FIG. 6, the fourth communication information includes the result obtained after calculation is performed on the first output information and the second output information by the preset algorithm. The preset algorithm includes but is not limited to weighting and/or other mathematical operations. For example, the weighting may include linear averaging, multiplicative averaging, and a combination of other common averaging methods. The mathematical operations may include combinations of various common mathematical operations such as addition, subtraction, multiplication, K^{th} power, K^{th} root, logarithm, derivation, and partial derivation. K is any number. For example, K may be a positive number or a negative number or 0, or may be a real number or a complex number, which is not specifically limited in this embodiment.

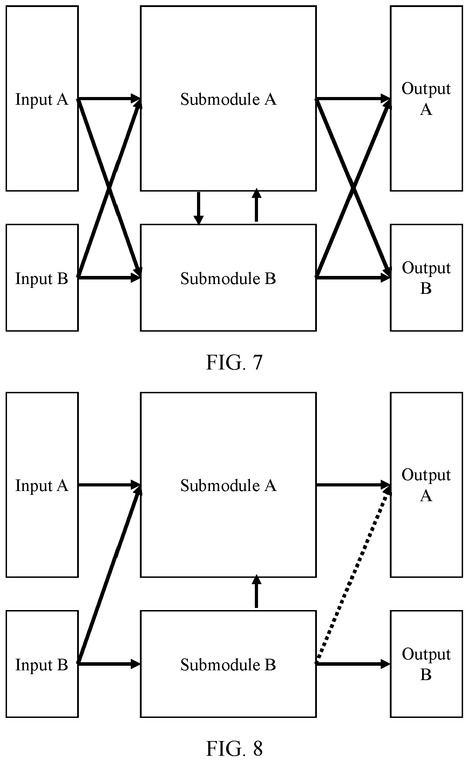

In the foregoing possible implementation, optionally, the first output information may be determined by an output of the first AI subnetwork and/or an output of the second AI subnetwork; and/or the second output information may be determined by the output of the first AI subnetwork and/or the output of the second AI subnetwork. For example, in FIG. 7 and FIG. 4, the first output information is determined by the output of the first AI subnetwork and the output of the second AI subnetwork; and the second output information is determined by the output of the first AI subnetwork and the output of the second AI subnetwork. In FIG. 5, the first output information is determined by the output of the first AI subnetwork, and the second output information is determined by the output of the first AI subnetwork and the output of the second AI subnetwork, or by the output of the second AI subnetwork. In FIG. 8, the first output information is determined by the output of the first AI subnetwork and the output of the second AI subnetwork, or is determined by the output of the first AI subnetwork, and the second output information is determined by the output of the second AI subnetwork.

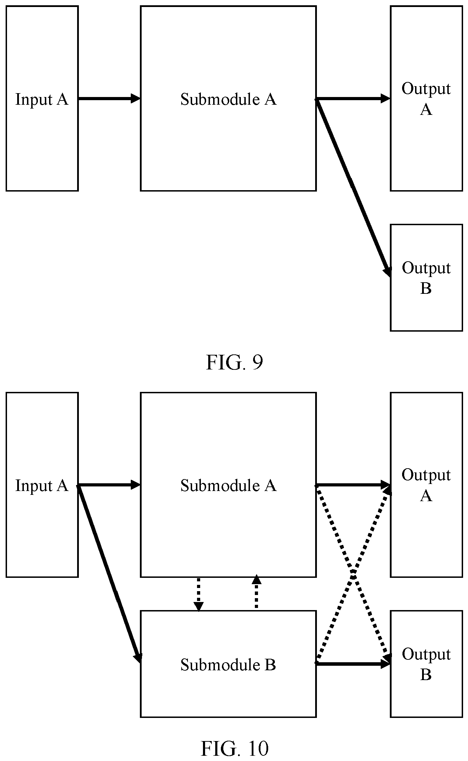

In the foregoing possible implementation, in a case that p is equal to 0, a size of the fourth communication information is greater than or equal to a size of the second communication information. For example, in FIG. 9, the n pieces of subband information are input, and the first output information and the second output information are output, where a size of the first output information is the same as a size of the second communication information. Compared with the second communication information, the fourth communication information may include more information.

In another possible implementation, in a case that p is equal to 0, a size of the fourth communication information is less than or equal to a size of the second communication information.

In the foregoing possible implementation, in the case that p is equal to 0, the n pieces of second target subband information may be alternatively input into the first AI subnetwork and the second AI subnetwork. For example, in FIG. 10, the n pieces of second target subband information is separately input as an input A into the first AI subnetwork and the second AI subnetwork, and the first output information and the second output information may be obtained at the same time, so that a size of the obtained fourth communication information (including the first output information and the second output information) is greater than a size of the second communication information, and the n pieces of second target subband information may be better processed to obtain output information of higher quality.

As shown in FIG. 10, in the foregoing possible implementation, the input of the first AI subnetwork may include or may not include the intermediate information of the second AI subnetwork, and the input of the second AI subnetwork may include or may not include the intermediate information of the first AI subnetwork. The first output information may be determined by the output of the first AI subnetwork, or may be determined by the output of the first AI subnetwork and the output of the second AI subnetwork, and the second output information may be determined by the output of the second AI subnetwork, or may be determined by the output of the second AI subnetwork and the output of the first AI subnetwork. This is not specifically in this embodiment of this application.

Alternatively, in another possible implementation, the first communications device may further send the third communication information by using the following steps:
Step 1: The first communications device divides the third communication information into (n+p) pieces of second target subband information, where p is an integer greater than or equal to 0, that is, the third communication information is greater than or equal to the first communication information.
Step 2: Input n pieces of second target subband information into the first AI subnetwork, and input other p pieces of second target subband information in the (n+p) pieces of second target subband information into the first AI subnetwork, where p is less than or equal to N.

That is, in this possible implementation, the (n+p) pieces of second target subband information are all input into the first AI subnetwork, where the (n+p) pieces of second target subband information may be simultaneously input as the input information of the first AI subnetwork, for example, when (n+p) is less than or equal to N, the (n+p) pieces of second target subband information are simultaneously input as the input information of the first AI subnetwork. Alternatively, the n pieces of second target subband information and the p pieces of second target subband information may be separately input as the input information of the first AI subnetwork, for example, in a case that (n+p) is greater than N, the n pieces of second target subband information and the p pieces of second target subband information are separately input as the input information of the first AI subnetwork. For example, the n pieces of second target subband information are first input into the first AI subnetwork, and then the p pieces of second target subband information are input into the first AI subnetwork. Optionally, when the p pieces of second target subband information are input into the first AI subnetwork, the first AI subnetwork may use intermediate information or output information used when the n pieces of second target subband information are input.

Step 3: Send fourth communication information output by the first AI subnetwork.

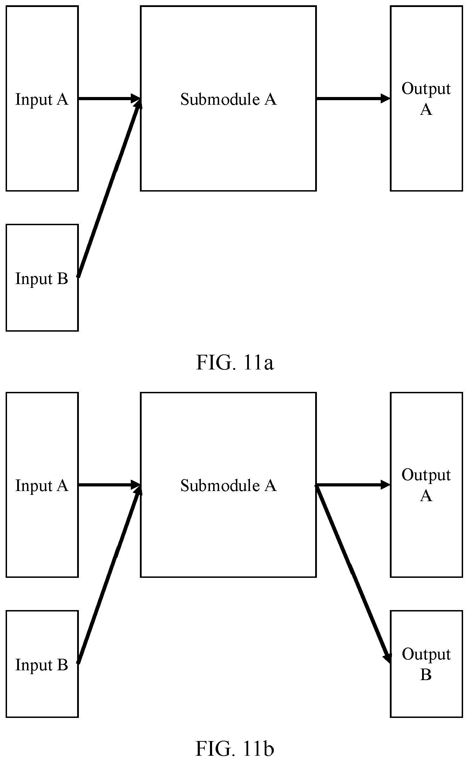

For example, in FIG. 11a, the n pieces of second target subband information are input as an input A into the first AI subnetwork, the p pieces of second target subband information are input as an input B into the first AI subnetwork, and an output A of the first AI subnetwork is used as the fourth communication information.

For another example, in FIG. 1 1b, the n pieces of second target subband information are input as an input A into the first AI subnetwork, the p pieces of second target subband information are input as an input B into the first AI subnetwork, and an output A and an output B of the first AI subnetwork are used as the fourth communication information.

In the foregoing possible implementation, optionally, the fourth communication information includes first output information and/or second output information, and optionally, a size of the first output information is the same as a size of the second communication information.

Optionally, in a case that the fourth communication information includes only the first output information, a size of the fourth communication information is the same as a size of the second communication information. That is, in this possible implementation, different input dimensions and output dimensions may be the same, but information contained in the outputs is different (that is, the size of the second communication information and the size of the fourth communication information are the same, but actual information contained in the second communication information and actual information contained in the fourth communication information are different), and has different impact on subsequent modules. Compared with the second communication information, an amount of information represented by the fourth communication information is larger and more accurate, which brings better performance.

In a possible implementation of this embodiment of this application, the second communication information and/or the fourth communication information includes one of the following (1) to (10).
(1) Reference signal: a reference signal for signal processing. For example, the reference signal may include a reference signal for signal detection, filtering, equalization, and the like. The reference signal includes but is not limited to: a demodulation reference signal (Demodulation Reference Signal, DMRS), a sounding reference signal (Sounding Reference Signal, SRS), a synchronization signal and physical broadcast channel signal block (or synchronization signal block) (Synchronization Signal and PBCH block, SSB), a tracking reference signal (Tracking Reference Signal, TRS), a phase TRS (Phase-TRS, PTRS), a channel state information (Channel State Information, CSI) reference signal (CSI Reference Signal, CSI-RS), and the like.
(2) Signal carried on a channel. The channel includes but is not limited to a physical downlink control channel (Physical downlink control channel, PDCCH), a physical downlink shared channel (Physical downlink shared channel, PDSCH), a physical uplink control channel (Physical Uplink Control Channel, PUCCH), a physical uplink shared channel (Physical Uplink Shared Channel, PUSCH), a physical random access channel (Physical Random Access Channel, PRACH), a physical broadcast channel (Physical broadcast channel, PBCH), and the like.
(3) Channel state information.

For example, the channel state information may include at least one of the following:
(3-1). Channel state information feedback information. The channel state information feedback information includes but is not limited to channel related information, channel matrix related information, channel feature information, channel matrix feature information, a PMI, a rank indicator (Rank indicator, RI), a CSI-RS resource indicator (CSI-RS Resource Indicator, CRI), a channel quality indicator (Channel quality indicator, CQI), a layer indicator (Layer Indicator, LI), and the like.
(3-2) Channel state information of frequency division duplex (Frequency Division Duplex, FDD) uplink and downlink partial reciprocity.

For an FDD system, according to partial reciprocity, a base station obtains an angle and latency information based on an uplink channel, and may notify UE of the angle information and latency information through a CSI-RS precoding or direct indication method. The UE performs reporting based on an indication of the base station or performs selection or reporting within an indication range of the base station, thereby reducing a calculation amount of the LTE and overhead of CSI reporting.
(4) Beam information. The beam information includes but is not limited to: beam quality, beam indication information (for example, a reference signal ID), beam failure indication information, and new beam indication information in beam failure recovery. The beam information may be further beam information used for beam management, including: beam measurement, beam reporting, beam prediction, beam failure detection, beam failure recovery, and a new beam indication in beam failure recovery.
(5) Channel prediction information. The channel prediction information may include channel state information prediction, beam prediction, and the like.
(6) Interference information. The interference information includes but is not limited to information such as intra-cell interference, inter-cell interference, out-of-band interference, and cross-modulation interference.
(7) Positioning information.
(8) Trajectory information.

A network side device may estimate, by using a reference signal (such as an SRS), a specific position (including a horizontal position and/or a vertical position) or a possible future trajectory of the LTE, or information for assisting position estimation or trajectory estimation.

(9) prediction information of a high-layer service and prediction information of a high-layer parameter, and management information of a high-layer service and management information of a high-layer parameter. The information includes but is not limited to: a throughput, a required packet size, a service requirement, a moving speed, noise information, and the like.

(10) Control signaling. For example, the control signaling is signaling related to power control and signaling related to beam management.

In this embodiment of this application, a communication peer of the first communications device (that is, the second communications device) may use a matching AI network to process the received second communication information and/or fourth communication information, or may use a non-AI method to process the received second communication information and/or fourth communication information, or the second communication information and/or the fourth communication information may be directly used.

It should be noted that, the communication information sending method provided in this embodiment of this application may be performed by a communication information sending apparatus, or by a control module that is in the communication information sending apparatus and that is configured to perform the communication information sending method. In this embodiment of this application, that the communication information sending apparatus performs the communication information sending method is used as an example to describe a communication information sending apparatus provided in an embodiment of this application.

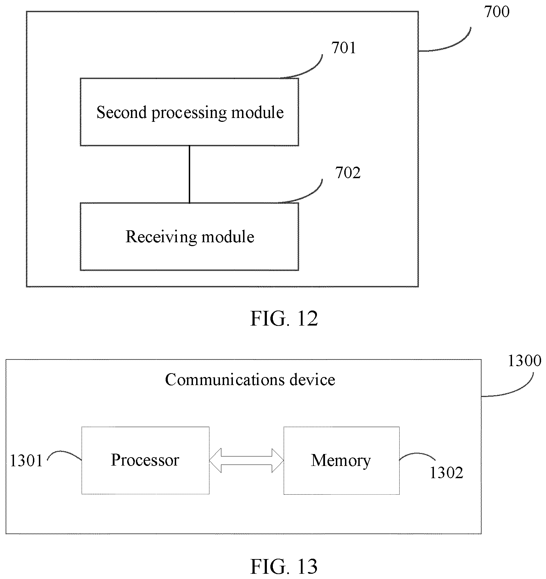

FIG. 12 is a schematic structural diagram of a communication information sending apparatus according to an embodiment of this application. As shown in FIG. 12, the sending apparatus 1200 may include: a division module 1201, configured to divide first communication information into n pieces of first target subband information; an input module 1202, configured to input the n pieces of first target subband information into a first artificial intelligence AI subnetwork of a first AI network model, where a maximum input amount of the first AI subnetwork is N pieces of subband information, a maximum input amount of the first AI network is M pieces of subband information, n, M, and N are all integers greater than 0, n is less than or equal to N, and N is less than or equal to M; and a sending module 1203, configured to send second communication information output by the first AI subnetwork.

In a possible implementation, that the division module 1201 divides first communication information into one or more pieces of first target subband information includes: dividing the first communication information into one or more pieces of first target subband information based on a target resource of the first communication information, where the target resource includes at least one of the following: a frequency domain resource, a time domain resource, a spatial domain resource, a code domain resource, a time delay domain resource, a Doppler domain resource, a Fourier transform domain resource, an S domain resource, and a Z domain resource.

In a possible implementation, that the division module 1201 divides first communication information into one or more pieces of first target subband information includes at least one of the following:
dividing, in a unit of a frequency domain unit resource, the first communication information into one or more pieces of first target subband information on the frequency domain resource, where the frequency domain unit resource includes at least one of the following: a carrier, a resource block RB, a physical resource block PRB, a subband, a precoding resource block group PRG, and a bandwidth part BWP;
dividing, in a unit of a time domain unit resource, the first communication information into one or more pieces of first target subband information on the time domain resource, where the time domain unit resource includes at least one of the following: a symbol (such as an OFDM symbol), a slot, a half-slot, a frame, a subframe, a radio frame, a millisecond, and a second;
dividing, in a unit of a spatial domain unit resource, the first communication information into one or more pieces of first target subband information on the spatial domain resource, where the spatial domain unit resource includes at least one of the following: an antenna, an antenna element, an antenna panel, a transmit/receive unit, a beam, a layer, a rank, and an antenna angle; and
dividing, in a unit of a code domain unit resource, the first communication information into one or more pieces of first target subband information on the code domain resource, where the code domain unit resource includes at least one of the following: an orthogonal code, a quasi-orthogonal code, and a semi-orthogonal code.

In a possible implementation, that the input module 1202 inputs the n pieces of first target subband information into a first artificial intelligence AI subnetwork of a first AI network model includes:
inputting, in a predetermined order, the n pieces of first target subband information into the first AI subnetwork, where the predetermined order includes: a descending order or an ascending order of identifiers of the n pieces of first target subband information; or
if an input amount of the first AI subnetwork is fixedly N pieces of subband information, inputting the n pieces of first target subband information and N-n pieces of invalid subband information into the first AI subnetwork, where the n pieces of first target subband information are located in a specified position.

In a possible implementation, a size of the second communication information is a fixed value, or a size of the second communication information is determined by an amount of input first target subband information.

In a possible implementation, that a size of the second communication information is determined by an amount of the input first target subband information includes:
the size of the second communication information is directly proportional to the amount of the input first target subband information; or
an increment of the size of the second communication information is directly proportional to an increment of the amount of the input first target subband information.

In a possible implementation, as shown in FIG. 12, the apparatus may further include: a training module 1204, configured to train the first AI network model by using a plurality of training samples, where one of the training samples includes: m pieces of subband information and a size of output information corresponding to the m pieces of subband information, and m is less than or equal to M.

In a possible implementation, the second communication information includes one of the following:
a reference signal;
a signal carried on a channel;
channel state information;
beam information;
channel prediction information;
interference information;
positioning information;
trajectory information;
prediction information of a high-layer service and prediction information of a high-layer parameter;
management information of a high-layer service and management information of a high-layer parameter; and
control signaling.

In a possible implementation, the division module 1201 is further used by the first communications device to divide third communication information into (n+p) pieces of second target subband information, where p is an integer greater than or equal to 0; the input module 1202 is further configured to input n pieces of second target subband information into the first AI subnetwork, and input other p pieces of second target subband information in the (n+p) pieces of second target subband information into a second AI subnetwork of the first AI network model, where a maximum input amount of the second AI subnetwork is P pieces of subband information, P is an integer greater than 0, p is less than or equal to P, and P is less than or equal to M; and the sending module 1203 is further configured to send fourth communication information output by the first AI network.

In a possible implementation, input information of the first AI subnetwork further includes at least one of the following: the other p pieces of second target subband information, intermediate information of the second AI subnetwork, and output information of the second AI subnetwork; and input information of the second AI subnetwork further includes at least one of the following: the n pieces of target subband information, intermediate information of the first AI subnetwork, and output information of the first AI subnetwork.

In a possible implementation, the fourth communication information includes at least one of the following: first output information, second output information, and a result obtained after calculation is performed on the first output information and the second output information by a preset algorithm, where the first output information is determined by an output of the first AI subnetwork and/or an output of the second AI subnetwork; and/or the second output information is determined by the output of the first AI subnetwork and/or the output of the second AI subnetwork.

In a possible implementation, in a case that p is equal to 0, a size of the fourth communication information is greater than or equal to a size of the second communication information.

In a possible implementation, in a case that p is equal to 0, a size of the fourth communication information is less than or equal to a size of the second communication information.

In a possible implementation, the division module 1201 is further configured to divide third communication information into (n+p) pieces of second target subband information, where p is an integer greater than or equal to 0; the input module 1202 is further configured to input n pieces of second target subband information into the first AI subnetwork, and input other p pieces of second target subband information in the (n+p) pieces of second target subband information into the first AI subnetwork, where p is less than or equal to N; and the sending module 1203 is further configured to send fourth communication information output by the first AI subnetwork.

In a possible implementation, the fourth communication information includes first output information and/or second output information, where a size of the first output information is the same as a size of the second communication information.

The communication information sending apparatus in this embodiment of this application may be an apparatus, or may be a component, an integrated circuit, or a chip in a terminal or a network device. The apparatus may be a mobile terminal or a non-mobile terminal. For example, the mobile device may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The communication information sending apparatus in this embodiment of this application may be an apparatus with an operating system. The operating system may be an Android (Android) operating system, an iOS operating system, or another possible operating system. This is not specifically limited in the embodiments of this application.

The communication information sending apparatus provided in this embodiment of this application can implement the processes implemented in the method embodiments in FIG. 2 to FIG. 11, and achieve a same technical effect. To avoid repetition, details are not described herein again.

Optionally, as shown in FIG. 13, an embodiment of this application further provides a communications device 1300, including a processor 1301, a memory 1302, and a program or an instruction that is stored in the memory 1302 and executable on the processor 1301. When the program or the instruction is executed, the processes of the foregoing communication information sending method embodiments are implemented, and a same technical effect can be achieved. To avoid repetition, details are not described herein again.

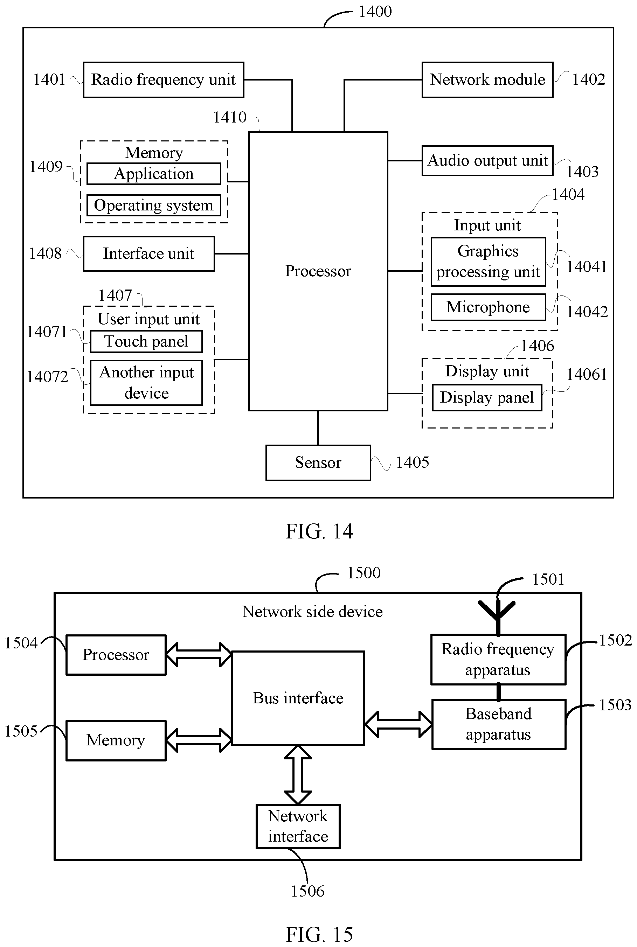

FIG. 14 is a schematic diagram of a hardware structure of a terminal according to an embodiment of this application.

The terminal 1400 includes but is not limited to components such as a radio frequency unit 1401, a network module 1402, an audio output unit 1403, an input unit 1404, a sensor 1405, a display unit 1406, a user input unit 1407, an interface unit 1408, a memory 1409, and a processor 1410.

It may be understood by a person skilled in the art that the terminal 1400 may further include a power supply (such as a battery) that supplies power to each component. The power supply may be logically connected to the processor 1410 by using a power management system, to implement functions such as charging, discharging, and power consumption management by using the power management system. The terminal structure shown in FIG. 14 constitutes no limitation on the terminal, and the terminal may include more or fewer components than those shown in the figure, or combine some components, or have different component arrangements. Details are not described herein.

It should be understood that, in this embodiment of this application, the input unit 1404 may include a graphics processing unit (Graphics Processing Unit, GPU) 14041 and a microphone 14042. The graphics processing unit 14041 processes image data of a static picture or a video obtained by an image capture apparatus (such as a camera) in video capture mode or image capture mode. The display unit 1406 may include a display panel 14061, and the display panel 14061 may be configured in a form of a liquid crystal display, an organic light-emitting diode, or the like. The user input unit 1407 includes a touch panel 14071 and another input device 14072. The touch panel 14071 is also referred to as a touchscreen. The touch panel 14071 may include two parts: a touch detection apparatus and a touch controller. The another input device 14072 may include but is not limited to a physical keyboard, a functional button (such as a volume control button or a power on/off button), a trackball, a mouse, and a joystick. Details are not described herein.

In this embodiment of this application, the radio frequency unit 1401 receives downlink data from a network side device and then sends the downlink data to the processor 1410 for processing; and sends uplink data to the network side device. Usually, the radio frequency unit 1401 includes but is not limited to an antenna, at least one amplifier, a transceiver, a coupler, a low noise amplifier, a duplexer, and the like.

The memory 1409 may be configured to store a software program or an instruction and various pieces of data. The memory 1409 may mainly include a program or instruction storage area and a data storage area. The program or instruction storage area may store an operating system, and an application program or an instruction required by at least one function (for example, a sound playing function or an image playing function). In addition, the memory 1409 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1410 may include one or more processing units. Optionally, an application processor and a modem processor may be integrated into the processor 1410. The application processor mainly processes an operating system, a user interface, an application, an instruction, or the like. The modem processor mainly processes wireless communications, for example, a baseband processor. It can be understood that, alternatively, the modem processor may not be integrated into the processor 1410.

The processor 1410 is configured to divide first communication information into n pieces of first target subband information; and input the n pieces of first target subband information into a first artificial intelligence AI subnetwork of a first AI network model, where a maximum input amount of the first AI subnetwork is N pieces of subband information, a maximum input amount of the first AI network is M pieces of subband information, n, M, and N are all integers greater than 0, n is less than or equal to N, and N is less than or equal to M.

The radio frequency unit 1401 is configured to send second communication information output by the first AI subnetwork.

The terminal provided in this embodiment of this application can implement the method performed by the first communications device in the method 200, and a same technical effect can be achieved. To avoid repetition, details are not described herein again.

Specifically, an embodiment of this application further provides a network side device. As shown in FIG. 15, the network device 1500 includes an antenna 1501, a radio frequency apparatus 1502, and a baseband apparatus 1503. The antenna 1501 is connected to the radio frequency apparatus 1502. In an uplink direction, the radio frequency apparatus 1502 receives information by using the antenna 1501, and transmits the received information to the baseband apparatus 1503 for processing. In a downlink direction, the baseband apparatus 1503 processes to-be-sent information, and sends the to-be-sent information to the radio frequency apparatus 1502. After processing the received information, the radio frequency apparatus 1502 sends the information by using the antenna 1501.

The foregoing band processing apparatus may be located in the baseband apparatus 1503, and the method performed by the network side device in the foregoing embodiment may be implemented in the baseband apparatus 1503. The baseband apparatus 1503 includes a processor 1504 and a memory 1505.

For example, the baseband apparatus 1503 may include at least one baseband board. Multiple chips are disposed on the baseband board. As shown in FIG. 15, one chip is, for example, the processor 1504, and is connected to the memory 1505, to invoke a program in the memory 1505 to perform an operation of the network side device shown in the foregoing method embodiment.

The baseband apparatus 1503 may further include a network interface 1506, configured to exchange information with the radio frequency apparatus 1502, where the interface is, for example, a common public radio interface (common public radio interface, CPRI for short).

Specifically, the network side device in this embodiment of the present invention further includes an instruction or a program stored in the memory 1505 and executable on the processor 1504. The processor 1504 invokes the instruction or the program in the memory 1505 to perform the method performed by the modules shown in FIG. 12, with the same technical effect achieved. To avoid repetition, details are not provided herein again.

The network side device provided in this embodiment of this application can implement the method performed by the first communications device in the method 200, and a same technical effect can be achieved. To avoid repetition, details are not described herein again.

An embodiment of this application further provides a readable storage medium. The readable storage medium stores a program or an instruction, and when the program or the instruction is executed by a processor, the processes of the foregoing communication information sending method embodiment are implemented and a same technical effect can be achieved. To avoid repetition, details are not described herein again.

The processor is the processor in the terminal device or the network side device described in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip. The chip includes a processor and a communications interface, the communications interface is coupled to the processor, and the processor is configured to run a program or an instruction of a network side device to implement the processes of the communication information sending method embodiments, and a same technical effect can be achieved. To avoid repetition, details are not described herein again.

A computer program product is provided, and the computer program product includes a processor, a memory, and a program or an instruction that is stored in the memory and executable on the processor. When the program or instruction is executed by the processor, the processes of the communication information sending method embodiments are implemented, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of more restrictions, an element defined by the statement "including a..." does not preclude the presence of other identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the foregoing specific implementations. The foregoing specific implementations are merely schematic instead of restrictive. Under enlightenment of this application, a person of ordinary skills in the art may make many forms without departing from aims and the protection scope of claims of this application, all of which fall within the protection scope of this application.

## Claims

1. A communication information sending method, comprising:
dividing, by a first communications device, first communication information into n pieces of first target subband information;
inputting the n pieces of first target subband information into a first artificial intelligence AI subnetwork of a first AI network model, wherein a maximum input amount of the first AI subnetwork is N pieces of subband information, a maximum input amount of the first AI network model is M pieces of subband information, n, M, and N are all integers greater than 0, n is less than or equal to N, and N is less than or equal to M; and
sending second communication information output by the first AI subnetwork.

2. The method according to claim 1, wherein the dividing, by a first communications device, first communication information into n pieces of first target subband information comprises:
dividing the first communication information into one or more pieces of first target subband information based on a target resource of the first communication information, wherein the target resource comprises at least one of following: a frequency domain resource, a time domain resource, a spatial domain resource, a code domain resource, a time delay domain resource, a Doppler domain resource, a Fourier transform domain resource, an S domain resource, and a Z domain resource.

3. The method according to claim 2, wherein the dividing, by a first communications device, first communication information into one or more pieces of first target subband information comprises at least one of following:
dividing, in a unit of a frequency domain unit resource, the first communication information into one or more pieces of first target subband information on the frequency domain resource, wherein the frequency domain unit resource comprises at least one of following: a carrier, a resource block RB, a physical resource block PRB, a subband, a precoding resource block group PRG, and a bandwidth part BWP;
dividing, in a unit of a time domain unit resource, the first communication information into one or more pieces of first target subband information on the time domain resource, wherein the time domain unit resource comprises at least one of following: a symbol, a slot, a half-slot, a frame, a subframe, a radio frame, a millisecond, and a second;
dividing, in a unit of a spatial domain unit resource, the first communication information into one or more pieces of first target subband information on the spatial domain resource, wherein the spatial domain unit resource comprises at least one of following: an antenna, an antenna element, an antenna panel, a transmit/receive unit, a beam, a layer, a rank, and an antenna angle; and
dividing, in a unit of a code domain unit resource, the first communication information into one or more pieces of first target subband information on the code domain resource, wherein the code domain unit resource comprises at least one of following: an orthogonal code, a quasi-orthogonal code, and a semi-orthogonal code.

4. The method according to claim 1, wherein the inputting the n pieces of first target subband information into a first artificial intelligence AI subnetwork of a first AI network model comprises:
inputting, in a predetermined order, the n pieces of first target subband information into the first AI subnetwork, wherein the predetermined order comprises: a descending order or an ascending order of identifiers of the n pieces of first target subband information; or
if an input amount of the first AI subnetwork is fixedly N pieces of subband information, inputting the n pieces of first target subband information and (N-n) pieces of invalid subband information into the first AI subnetwork, wherein the n pieces of first target subband information are located in a specified position.

5. The method according to claim 1, wherein a size of the second communication information is a fixed value, or a size of the second communication information is determined by an amount of input first target subband information.

6. The method according to claim 5, wherein that a size of the second communication information is determined by an amount of the input first target subband information comprises:
the size of the second communication information is directly proportional to the amount of the input first target subband information; or
an increment of the size of the second communication information is directly proportional to an increment of the amount of the input first target subband information.

7. The method according to any one of claims 1 to 6, wherein before the dividing, by a first communications device, first communication information into n pieces of first target subband information, the method further comprises:
training the first AI network model by using a plurality of training samples, wherein one of the training samples comprises: m pieces of subband information and a size of output information corresponding to the m pieces of subband information, and m is less than or equal to M.

8. The method according to any one of claims 1 to 6, wherein the second communication information comprises one of following:
a reference signal;
a signal carried on a channel;
channel state information;
beam information;
channel prediction information;
interference information;
positioning information;
trajectory information;
prediction information of a high-layer service and prediction information of a high-layer parameter;
management information of a high-layer service and management information of a high-layer parameter; and
control signaling.

9. The method according to any one of claims 1 to 6, wherein after the second communication information is sent, the method further comprises:
dividing, by the first communications device, third communication information into (n+p) pieces of second target subband information, wherein p is an integer greater than or equal to 0;
inputting n pieces of second target subband information into the first AI subnetwork, and inputting other p pieces of second target subband information in the (n+p) pieces of second target subband information into a second AI subnetwork of the first AI network model, wherein a maximum input amount of the second AI subnetwork is P pieces of subband information, P is an integer greater than 0, p is less than or equal to P, and P is less than or equal to M; and
sending fourth communication information output by the first AI subnetwork.

10. The method according to claim 9, wherein
input information of the first AI subnetwork further comprises at least one of following:
the other p pieces of second target subband information, intermediate information of the second AI subnetwork, and output information of the second AI subnetwork; and
input information of the second AI subnetwork further comprises at least one of following:
the n pieces of target subband information, intermediate information of the first AI subnetwork, and output information of the first AI subnetwork.

11. The method according to claim 9, wherein the fourth communication information comprises at least one of following: first output information, second output information, and a result obtained after calculation is performed on the first output information and the second output information by a preset algorithm, wherein
the first output information is determined by an output of the first AI subnetwork and/or an output of the second AI subnetwork; and/or
the second output information is determined by the output of the first AI subnetwork and/or the output of the second AI subnetwork.

12. The method according to claim 9, wherein in a case that p is equal to 0, a size of the fourth communication information is greater than or equal to a size of the second communication information.

13. The method according to claim 9, wherein in a case that p is equal to 0, a size of the fourth communication information is less than or equal to a size of the second communication information.

14. The method according to any one of claims 1 to 6, wherein after the second communication information is sent, the method further comprises:
dividing, by the first communications device, third communication information into (n+p) pieces of second target subband information, wherein p is an integer greater than or equal to 0;
inputting n pieces of second target subband information into the first AI subnetwork, and inputting other p pieces of second target subband information in the (n+p) pieces of second target subband information into the first AI subnetwork, wherein p is less than or equal to N; and
sending fourth communication information output by the first AI subnetwork.

15. The method according to claim 14, wherein the fourth communication information comprises first output information and/or second output information, wherein a size of the first output information is same as a size of the second communication information.

16. A communication information sending apparatus, comprising:
a division module, configured to divide first communication information into n pieces of first target subband information;
an input module, configured to input the n pieces of first target subband information into a first artificial intelligence AI subnetwork of a first AI network model, wherein a maximum input amount of the first AI subnetwork is N pieces of subband information, a maximum input amount of the first AI network is M pieces of subband information, n, M, and N are all integers greater than 0, n is less than or equal to N, and N is less than or equal to M; and
a sending module, configured to send second communication information output by the first AI subnetwork.

17. The apparatus according to claim 16, wherein that the division module divides first communication information into one or more pieces of first target subband information comprises:
dividing the first communication information into one or more pieces of first target subband information based on a target resource of the first communication information, wherein the target resource comprises at least one of following: a frequency domain resource, a time domain resource, a spatial domain resource, a code domain resource, a time delay domain resource, a Doppler domain resource, a Fourier transform domain resource, an S domain resource, and a Z domain resource.

18. The apparatus according to claim 17, wherein that the division module divides first communication information into one or more pieces of first target subband information comprises at least one of following:
dividing, in a unit of a frequency domain unit resource, the first communication information into one or more pieces of first target subband information on the frequency domain resource, wherein the frequency domain unit resource comprises at least one of following: a carrier, a resource block RB, a physical resource block PRB, a subband, a precoding resource block group PRG, and a bandwidth part BWP;
dividing, in a unit of a time domain unit resource, the first communication information into one or more pieces of first target subband information on the time domain resource, wherein the time domain unit resource comprises at least one of following: a symbol, a slot, a half-slot, a frame, a subframe, a radio frame, a millisecond, and a second;
dividing, in a unit of a spatial domain unit resource, the first communication information into one or more pieces of first target subband information on the spatial domain resource, wherein the spatial domain unit resource comprises at least one of following: an antenna, an antenna element, an antenna panel, a transmit/receive unit, a beam, a layer, a rank, and an antenna angle; and
dividing, in a unit of a code domain unit resource, the first communication information into one or more pieces of first target subband information on the code domain resource, wherein the code domain unit resource comprises at least one of following: an orthogonal code, a quasi-orthogonal code, and a semi-orthogonal code.

19. The apparatus according to claim 16, wherein that the input module inputs the n pieces of first target subband information into a first artificial intelligence AI subnetwork of a first AI network model comprises:
inputting, in a predetermined order, the n pieces of first target subband information into the first AI subnetwork, wherein the predetermined order comprises: a descending order or an ascending order of identifiers of the n pieces of first target subband information; or
if an input amount of the first AI subnetwork is fixedly N pieces of subband information, inputting the n pieces of first target subband information and N-n pieces of invalid subband information into the first AI subnetwork, wherein the n pieces of first target subband information are located in a specified position.

20. The apparatus according to claim 16, wherein a size of the second communication information is a fixed value, or a size of the second communication information is determined by an amount of input first target subband information.

21. The apparatus according to claim 20, wherein that a size of the second communication information is determined by an amount of the input first target subband information comprises:
the size of the second communication information is directly proportional to the amount of the input first target subband information; or
an increment of the size of the second communication information is directly proportional to an increment of the amount of the input first target subband information.

22. The apparatus according to any one of claims 16 to 21, wherein the apparatus further comprises:
a training module, configured to train the first AI network model by using a plurality of training samples, wherein one of the training samples comprises: m pieces of subband information and a size of output information corresponding to the m pieces of subband information, and m is less than or equal to M.

23. The apparatus according to any one of claims 16 to 21, wherein the second communication information comprises one of following:
a reference signal;
a signal carried on a channel;
channel state information;
beam information;
channel prediction information;
interference information;
positioning information;
trajectory information;
prediction information of a high-layer service and prediction information of a high-layer parameter;
management information of a high-layer service and management information of a high-layer parameter; and
control signaling.

24. The apparatus according to any one of claims 16 to 21, wherein
the division module is further used by the first communications device to divide third communication information into (n+p) pieces of second target subband information, wherein p is an integer greater than or equal to 0;
the input module is further configured to input n pieces of second target subband information into the first AI subnetwork, and input other p pieces of second target subband information in the (n+p) pieces of second target subband information into a second AI subnetwork of the first AI network model, wherein a maximum input amount of the second AI subnetwork is P pieces of subband information, P is an integer greater than 0, p is less than or equal to P, and P is less than or equal to M; and
the sending module is further configured to send fourth communication information output by the first AI network.

25. The apparatus according to claim 24, wherein
input information of the first AI subnetwork further comprises at least one of following: the other p pieces of second target subband information, intermediate information of the second AI subnetwork, and output information of the second AI subnetwork; and
input information of the second AI subnetwork further comprises at least one of following: the n pieces of target subband information, intermediate information of the first AI subnetwork, and output information of the first AI subnetwork.

26. The apparatus according to claim 24, wherein the fourth communication information comprises at least one of following: first output information, second output information, and a result obtained after calculation is performed on the first output information and the second output information by a preset algorithm, wherein
the first output information is determined by an output of the first AI subnetwork and/or an output of the second AI subnetwork; and/or
the second output information is determined by the output of the first AI subnetwork and/or the output of the second AI subnetwork.

27. The apparatus according to claim 24, wherein in a case that p is equal to 0, a size of the fourth communication information is greater than or equal to a size of the second communication information.

28. The apparatus according to claim 24, wherein in a case that p is equal to 0, a size of the fourth communication information is less than or equal to a size of the second communication information.

29. The apparatus according to any one of claims 16 to 21, wherein
the division module is further configured to divide third communication information into (n+p) pieces of second target subband information, wherein p is an integer greater than or equal to 0;
the input module is further configured to input n pieces of second target subband information into the first AI subnetwork, and input other p pieces of second target subband information in the (n+p) pieces of second target subband information into the first AI subnetwork, wherein p is less than or equal to N; and
the sending module is further configured to send fourth communication information output by the first AI subnetwork.

30. The apparatus according to claim 29, wherein the fourth communication information comprises first output information and/or second output information, wherein a size of the first output information is same as a size of the second communication information.

31. A communications device, comprising a processor, a memory, and a program or an instruction that is stored in the memory and executable on the processor, wherein when the program or the instruction is executed by the processor, steps of the communication method according to any one of claims 1 to 15 are implemented.

32. A readable storage medium, wherein the readable storage medium stores a program or an instruction, and when the program or the instruction is executed by a processor, the communication method according to any one of claims 1 to 15 is implemented.
